# EUROPEAN PATENT SPECIFICATION

(11) **EP 4 303 127 B1**
(45) Date of publication and mention of the grant of the patent: **21.10.2026**
(21) Application number: 23183963.0
(22) Date of filing: 06.07.2023
(51) Int. Cl.: B64D 27/04, B64D 27/24, B64D 27/02

(54) **HYBRID-ELECTRIC AIRCRAFT PROPULSION SYSTEM AND METHOD**
HYBRIDELEKTRISCHES FLUGZEUGANTRIEBSSYSTEM UND VERFAHREN
SYSTÈME ET PROCÉDÉ DE PROPULSION D'AÉRONEF HYBRIDE-ÉLECTRIQUE

(30) Priority: 08.07.2022 US 202217860722
(43) Date of publication of application: 10.01.2024
(73) Proprietor: PRATT & WHITNEY CANADA CORP., Longueuil, Québec J4G 1A1 (CA)
(72) Inventor: SMITH, Michael P., (01BE5) Longueuil, J4G 1A1 (CA)
(74) Representative: Dehns

(56) References cited:
- GB-A- 2 594 072
- US-A1- 2020 298 988
- US-A1- 2021 179 286

## Description

### BACKGROUND OF THE INVENTION

### 1. Technical Field

The present disclosure relates to hybrid-electric aircraft propulsion systems and methods for operating the same.

### 2. Background Information

Internal combustion (IC) engines such as a rotary engine (e.g., a Wankel type rotary engine), a reciprocating piston engine, and other constant volume IC engines have been used or proposed as an alternative power source for aircraft; e.g., conventional fixed wing and rotorcraft including helicopters and tiltrotors. There are benefits and disadvantages relating to both IC engines and small gas turbine engines. On the one hand, IC engines are often less expensive than a typical gas turbine engine and can be relatively fuel efficient when compared to a small gas turbine engine. On the other hand, the fuel efficiency of IC engines is often offset by the IC engine having a greater weight than a small gas turbine engine. The performance of an IC engine will likely vary as a function of altitude and an IC engine will likely have an RPM operating band that may not align with the desired rotational speed of a propulsor such as a thrust producing fan or the rotor blades of a rotor craft.

What is needed is a propulsion system that provides an acceptable operating band that accommodates both low thrust operation and high thrust operation and one that provides desirable performance.

GB2594072A discloses an aircraft propulsion system including an internal combustion engine, an electric motor, a propulsor and an electrical energy storage device. There is no mechanical power management device between the electric generator and the compressor. The electric motor is not configured to selectively disconnect the electric generator from the turbine. US 2020/298988 A1 discloses a hybrid propulsion system including a heat engine configured to drive a heat engine shaft. An electric motor is configured to drive an electric motor shaft. A transmission system includes at least one gearbox. The transmission system is configured to receive rotational input power from each of the heat engine shaft and the electric motor shaft and to convert the rotation input power to output power. US 2021/179286 A1 discloses an aircraft hybrid propulsion system comprising an internal combustion engine, an electric motor a propulsor and a combining gearbox. The internal combustion engine is coupled to a first input of the combining gearbox, the electric motor is coupled to a second input of the combining gearbox, and the propulsor is coupled to an output of the combining gearbox, such that the propulsor is driveable in use by either or both of the internal combustion engine and the electric motor. Each of the internal combustion engine and the electric motor is coupled to its respective input by a respective clutch.

### SUMMARY

According to the present invention, a propulsion system for an aircraft is provided according to claim 1.

Features of embodiments of the invention are set forth in the dependent claims.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic perspective view of an aircraft.
FIG. 2 is a diagrammatic view of a present disclosure system embodiment.
FIG. 3 is a diagrammatic view of a present disclosure system embodiment.
FIG. 4 is a diagrammatic view of a present disclosure system embodiment.
FIG. 5 is a diagrammatic view of a present disclosure system embodiment.
FIG. 6 is a diagrammatic view of a present disclosure system embodiment.

### DETAILED DESCRIPTION

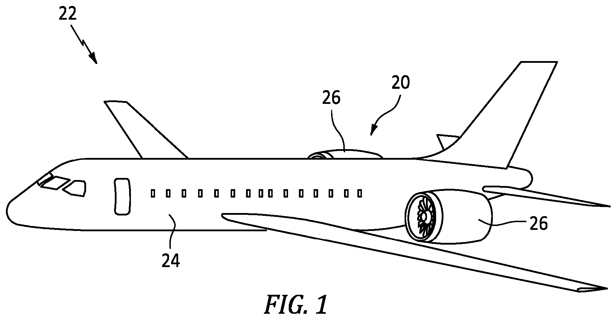

Referring to the FIGS. 1-5, aspects of the present disclosure include an aircraft propulsion system 20, an aircraft 22 that utilizes the present disclosure system, and a method for operating the same. FIG. 1 illustrates a conventional fixed wing aircraft 22 that may utilize embodiments of the present disclosure system 20. The aircraft 22 may include a fuselage 24 and at least one propulsion nacelle 26. As described herein, the present disclosure is not limited to conventional fixed wing aircraft, and may be utilized in a rotorcraft such as a helicopter or a tiltrotor.

The aircraft propulsion system includes an internal combustion (IC) engine, a fan, at least one turbine, at least one compressor, at least one electric generator, at least one electric motor, and at least one electric power storage unit. In some embodiments, the system may include a system controller in communication with various components within the system. The present disclosure aircraft propulsion system contemplates several different configurations that may include one or more than one of each of the aforesaid components.

The IC engine (e.g., an internal combustion engine characterized by periodic ignition of fuel and air) may be a Wankel type rotary engine, or a reciprocating piston engine, or other type of constant volume IC engine or rotating detonation engine that powers a rotating output shaft. The present disclosure is not limited to any particular type of IC engine. The IC engine may be configured to combust a variety of different fuels (e.g., hydrocarbon based fuel, hydrogen, or the like) and is not limited to any particular type of fuel. During operation, the IC engine intakes air and fuel and combusts the mixture of air and fuel to produce power. The combustion of the air/fuel mixture produces exhaust gases.

The IC engine utilizes a cooling system that includes at least one heat exchanger, coolant piping, and a coolant fluid. The coolant piping (e.g., including one or more pumps, fluid piping, valves, sensors, etc.) permits fluid communication of coolant between the IC engine and the heat exchanger. The heat exchanger is configured to transfer thermal energy from the IC engine coolant to a second fluid (e.g., ambient air at a lower temperature) during operation of the system. The present disclosure is not limited to any particular type of cooling system, and may use combinations of different types of heat exchangers and different fluids passing through a respective heat exchanger. The coolant may be glycol, or a glycol/water mixture, or other known coolant.

The at least one turbine may be a scroll type turbine (i.e., a "turbine scroll") or an axial-type turbine (e.g., a rotor having a hub with a plurality of turbine blades extending radially out from the hub). The turbine may be a single stage turbine or may have a plurality of turbine stages. As will be explained below, a source of gas (e.g., exhaust gases from the IC engine) at an elevated temperature and pressure provide the motive force to power the turbine.

The at least one compressor may be a scroll type compressor (i.e., a "compressor scroll") or an axial-type compressor (e.g., a rotor having a hub with a plurality of compressor blades extending radially out from the hub). The compressor may be a single stage compressor or may have a plurality of compressor stages. As will be explained below, ambient air ("inlet air") may be drawn into the compressor where it is worked to increase the pressure and temperature of the air. In some embodiments, a heat exchanger may be used to decrease the temperature of the compressed air prior to entry into the IC engine.

The system may include or be configured to drive one or more propulsors to provide propulsive force to the aircraft. An example of a propulsor is a fan configured for rotation about a rotational axis. Rotation of the fan about the rotational axis in a predetermined direction (e.g., either clockwise or counterclockwise) produces thrust that can be used to translationally power the aircraft. Another example of a propulsor is a plurality of rotary blades such as those used in a helicopter application.

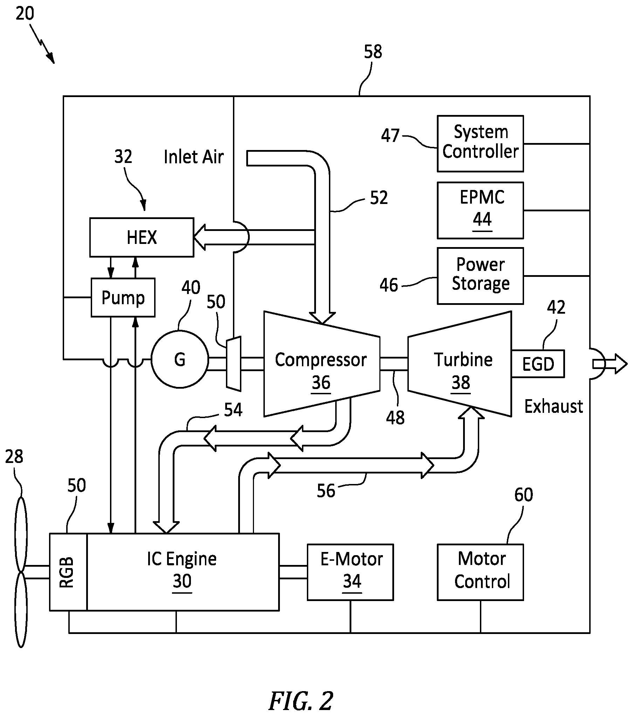

An electric generator(s) utilized in the present system may be configured to be rotationally driven and to produce electrical power. An electric generator employed within the system may incorporate controls (e.g., hardware, or control logic, or any combination thereof) to permit management of the electrical power produced by the generator to the system. Alternatively, as shown in FIGS. 2-6, at least some of such power management controls ("EPMC") may be disposed separately from the generator. The EPMC may include power conversion (e.g., DC to AC), signal conditioning, etc. to facilitate the production of power in a form that is acceptable for other components (e.g., electric motors) within the system. The system embodiments diagrammatically shown in FIGS. 2-5 include a single electric generator. The present disclosure system is not limited to any particular number of generators. As described herein, in some embodiments an electric generator within the present system may also be controlled to operate an as electric motor.

An electric motor(s) utilized within the present system may be configured to be rotationally driven by electrical power produced directly or indirectly by the electric generator(s) and/or by the electric power storage unit. In some embodiments, the electric motor may be in communication with a motor control that includes hardware, or control logic, or any combination thereof to facilitate operation / control of the electric motor. In the Figures, the motor control is shown as independent of the electric motor. An independent motor control is not required; e.g., the motor control may be integrally included in the electric motor. In some embodiments, electrical power for powering the electric motor may pass through (e.g., be conditioned by) the EPMC, then through the motor control before being delivered to the electric motor.

One or more mechanical power management devices ("MPMD") configured to receive a power input (e.g., RPMs, torque, etc.) and to produce a power output different from the power input (e.g., change in RPM, etc.) is disposed between system components; however, at least one MPMD is disposed between the compressor and generator. Further MPMDs may be disposed between the turbine and compressor, between the electric motor and the IC engine, between the IC engine and the propulsor, etc. Non-limiting examples of a MPMD include a reduction gear box (RGB), or a variable speed drive (VSD), clutch, or the like. In some embodiments, a MPMD may also be configured to selectively disengage the components from one another. However the at least one MPMD disposed between the electric generator and the compressor is configured to selectively disconnect the electric generator from the turbine.

The electric power storage unit is configured to store electrical power produced within the system and to produce that stored power upon demand by the system. An electric power storage unit may include one or more batteries. The electric power storage unit may be in communication with the EPMC for managing the released electric power.

Embodiments of the present disclosure aircraft propulsion system 20 may include a system controller in communication with system components, including one or more of the electric motor, compressor, EPMC, MPMD, IC engine cooling system 32, electric generator, turbine, electric power storage unit, IC engine, and various other components to control and or receive signals therefrom to perform the functions described herein. The system controller may assume a variety of different configurations and may be disposed in various locations within the aircraft. The system controller may include any type of computing device, computational circuit, processor(s), CPU, computer, or the like capable of executing a series of instructions that are stored in memory. In some embodiments, the system controller may include a plurality of controllers (e.g., each including a computing device or the like) each associated with one or more components within the system for control thereof. In some embodiments, those respective controllers may communicate with one another and thereby may collectively form the system controller, and/or subordinate controllers may communicate with a dominant controller. The present disclosure is not limited to any particular control architecture. The instructions executable by a controller may include an operating system, and/or executable software modules such as program files, system data, buffers, drivers, utilities, and the like. The executable instructions may apply to any functionality described herein to enable the system to accomplish the same algorithmically and/or coordination of system components. The system controller may include a single memory device or a plurality of memory devices and the present disclosure is not limited to any particular type of memory device.

In some embodiments, the system controller, the EPMC, and the motor control are independent of one another. In some embodiments, one or both of the EPMC and the motor control may be integral with the system controller.

As stated above, the present disclosure aircraft propulsion system 20 contemplates several different configurations that may include one or more than one of the aforesaid components. Non-limiting examples of those configurations are provided below to illustrate the utility of the present disclosure.

Referring to FIG. 2, an exemplary embodiment of a present disclosure aircraft propulsion system 20 is diagrammatically shown. This embodiment includes a propulsor 28 (shown as a fan or propeller for illustrative sake only), an IC engine 30, an IC engine cooling system 32, an electric motor 34, a compressor 36, a turbine 38, an electric generator 40, an exhaust gas device (EGD) 42, an EPMC 44, an electric power storage unit 46, and a system controller 47. System components may be disposed in the fuselage of an aircraft 22 or may be disposed in a nacelle 26 type structure. The present disclosure is not limited to any particular system configuration within an aircraft other than as described herein.

In the embodiment shown in FIG. 2, the turbine 38 is configured to drive a shaft 48 in communication with the compressor 36 and the electric generator 40. The shaft 48 may be a unitary structure in communication with the compressor 36 and the electric generator 40, or it may comprise a plurality of sub shafts; e.g., a first sub shaft placing the turbine 38 in communication with the compressor 36, and a second sub shaft placing the compressor 36 in communication with the electric generator 40. The shaft arrangement between the turbine 38, compressor 36, and electric generator 40 may assume a variety of different configurations and the present disclosure is not limited to any particular shaft arrangement. An MPMD 50 (e.g., an RGB, VSD, clutch, etc.) is configured to receive a power input and to produce a power output and is disposed between the compressor 36 and the electric generator 40. The power output of the MPMD 50 is different from the power input into the MPMD 50; e.g., a change in RPM, etc. The MPMD 50 is controllable to disconnect the component driving the MPMD 50 from the component being driven by the MPMD 50. For example, an MPMD 50 disposed between the turbine 38 (driving component) and the electric generator 40 (driven component) may be controllable to mechanically disconnect the electric generator 40 from the turbine 38; e.g., the MPMD 50 may function as a clutch operable to selectively disconnect the turbine 38 from the electric generator 40 in the event of an electric generator 40 failure, or in instances wherein electric generator power production is unnecessary. FIG. 2 diagrammatically illustrates an MPMD 50 (e.g., a clutch) disposed between the compressor 36 and the electric generator 40.

The electric motor 34 directly or indirectly communicates with the IC engine 30. Indirect communication may include an MPMD 50 like that described above. As stated above, an MPMD 50 (e.g., an RGB, or a VSD, clutch, or the like) may be disposed between the electric motor 34 and the IC engine 30 to alter the electric motor 34 input (e.g., RPMs) to the IC engine 30, or to selectively disengage the electric motor 34 from the IC engine 30.

The IC engine 30 directly or indirectly communicates with the propulsor 28. Indirect communication may include an MPMD 50 like that described above. FIG. 2 diagrammatically illustrates an RGB disposed between the IC engine 30 and the propulsor 28. The MPMD 50 / RGB may be configured to power the propulsor 28 at a different RPM that the input RPM into the MPMD 50 / RGB. The present disclosure is not limited to any particular arrangement of MPMDs 50.

Inlet air ducting 52 provides a conduit for ambient air to be passed from an air inlet to the compressor 36 and compressed air ducting 54 from the compressor 36 to the IV engine 30. Exhaust air ducting 56 provides a conduit for IC engine 30 exhaust gases to be passed from the IC engine 30 to the turbine 38.

In the operation of this system embodiment, ambient air entering the system 20 via inlet air ducting 52 passes through the compressor 36, or is bypassed around the compressor 36, or some combination thereof, and is then passed via compressed air ducting 54 to the IC engine 30 and mixed with fuel and ignited. In those instances when the compressor 36 is operating, the ambient air is worked to a higher than ambient pressure and temperature. In some embodiments, a heat exchanger (not shown) may be used to decrease the temperature of the compressed air prior to entry into the IC engine 30. The ignited fuel mixture causes an output shaft of the IC engine 30 to rotate and exhaust gases are produced. The exhaust gases are passed to the turbine 38 via exhaust air ducting 56, or bypassed around the turbine 38, or some combination thereof. In those instances when exhaust gases are directed into the turbine 38, the exhaust gases cause one or more rotary stages within the turbine 38 to rotate, and thereby cause the shaft 48 extending between the turbine 38 and the compressor 36 to rotate. As a result, the turbine 38 drives the compressor 36 and/or the electric generator 40. The exhaust gases exit the turbine 38 and pass through the EGD 42 (e.g., a muffler, nozzle, or the like). In some applications, the EGD 42 may be configured to provide propulsive force (e.g., thrust).

The turbine 38 may also drives the electric generator 40 and, in turn, the electric generator 40 produces electrical power and the system 20 is configured to provide that generated electrical power to other components within the system 20. In the system 20 configuration diagrammatically shown in FIG. 2, electrical power produced by the electric generator 40 is transferred to a link bus 58 (or other power transmission device) that places the electric generator 40 in electrical communication with the other system components. In the non-limiting embodiment shown in FIG. 2, electrical power produced by the electric generator 40 is transferred to the EPMC 44 for management into a form acceptable for use by other system components. The electric power produced by the electric generator 40 may be transferred directly to the electric power storage unit 46 or power may be transferred to the electric power storage unit 46 after passing through the EPMC 44 for selective charging of the electrical power storage unit 46. In the event the electric power storage unit 46 is fully charged, the bus 58 may be configured to selectively permit the produced power to bypass the electrical power storage unit 46. The EPMC 44 may be controlled by stored instructions executable by the system controller 47.

The electric motor 34 receives electrical power from the EPMC 44 via a motor control 60. The motor control 60 may include hardware, control logic, or any combination thereof to facilitate operation / control of the electric motor 34. The electric motor 34 may be in direct communication with IC engine 30 or in indirect communication via an MPMD 50. Motive force produced by the electric motor 34 is transferred to the IC engine 30. The electric motor 34 powered by the electric generator 40 may be controlled to add motive force to the IC engine 30 and thereby increase the output and/or the efficiency of the IC engine 30. In some embodiments, the electric motor 34 may be powered by the electric power storage unit 46 to start the IC engine 30.

The operation of the above described system 20 embodiment may vary during portions of an aircraft flight program performed by an aircraft 22. For example, during certain portions of an aircraft flight program, it may be desirable to operate the electric motor 34 to provide more or less motive force to the IC engine 30, or provide no motive force to the IC engine 30 to achieve the required system motive force and/or desirable efficiency, depending on conditions such as and not limited to atmospheric pressure, engine rotational speed, ram effects, engine power, etc. In similar fashion, during certain portions of an aircraft flight program, it may be desirable to operate the electric generator 40 to provide more or less electric power, or provide no electric power. Stored instructions executable by the system controller 47 can be used to control the various system components to produce the desired operation.

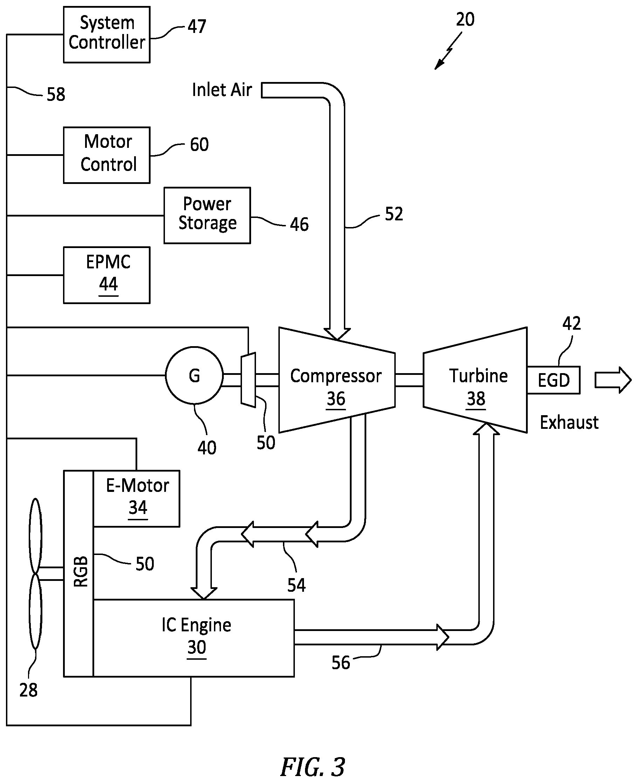

Now referring to FIG. 3, another exemplary embodiment of a present disclosure aircraft propulsion system 20 is diagrammatically shown. This embodiment is similar to the embodiment described above with respect to FIG. 2 except in this embodiment the electric motor 34 is not in communication with the IC engine 30, but rather both the IC engine 30 and the electric motor 34 are in communication with a MPMD 50 (e.g., an RBG). Both the IC engine 30 and the electric motor 34 provide motive force to the MPMD 50 and the MPMD 50 in turn provides motive force to the propulsor 28. FIG. 3 does not show an IC engine cooling system 32, but the system may include an IC engine cooling system 32 like that described herein and shown diagrammatically in FIG. 2. Some embodiments of a system 20 like that shown in FIG. 3 may include an MPMD 50 disposed between the turbine 38 (driving component) and the electric generator 40 (driven component); e.g., the MPMD 50 may function as a clutch operable to selectively disconnect the turbine 38 from the electric generator 40 in the event of an electric generator 40 failure, or in instances wherein electric generator power production is unnecessary.

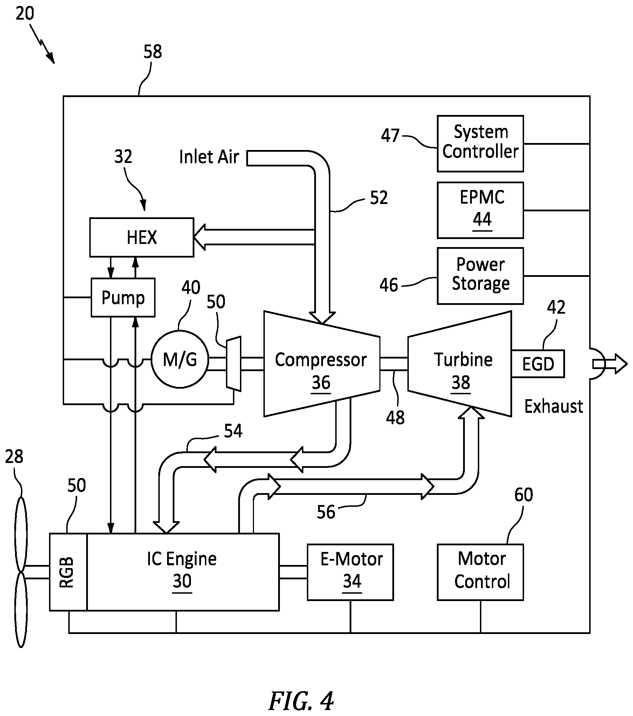

Now referring to FIG. 4, another exemplary embodiment of a present disclosure aircraft propulsion system 20 is diagrammatically shown. This embodiment is similar to the embodiment described above with respect to FIG. 2 except in this embodiment the electric generator 40 (labeled "M/G") is controllable to function as either an electric generator or as an electric motor. When the M/G is configured to function as an electric generator 40, the system operates as described above in the system diagrammatically shown in FIG. 2. When the M/G is configured to function as an electric motor 34 (e.g., powered from electric power stored in the electric power storage unit 46), the M/G provides motive force for driving the compressor 36. Hence, in this embodiment the turbine 38 and/or the M/G may provide motive force to drive the compressor 36. The motive power provided by the M/G can be used, for example, to augment the motive force provided to the compressor 36 by the turbine 38 during peak power portions of the aircraft flight program. In addition or alternatively, the M/G can be used to drive the compressor 36 during start-up of the IC engine 30; e.g., before exhaust gases from the IC engine 30 are appreciably available to power the turbine 38, the M/G can be used to power the compressor 36 to increase the pressure of the air fed into the IC engine 30 to assist in the start-up process of the IC engine 30. FIG. 4 does not show an IC engine cooling system 32, but the system may include an IC engine cooling system 32 like that described herein and shown diagrammatically in FIG. 2. Some embodiments of a system 20 like that shown in FIG. 4 may include an MPMD 50 disposed between the turbine 38 and the M/G 40; e.g., the MPMD 50 may function as a clutch operable to selectively disconnect the turbine 38 from the M/G 40 in the event of an M/G 40 failure, or in instances wherein M/G power production is unnecessary, or when the M/G is transitioning from functioning as an electric motor to functioning as an electric generator or vice versa.

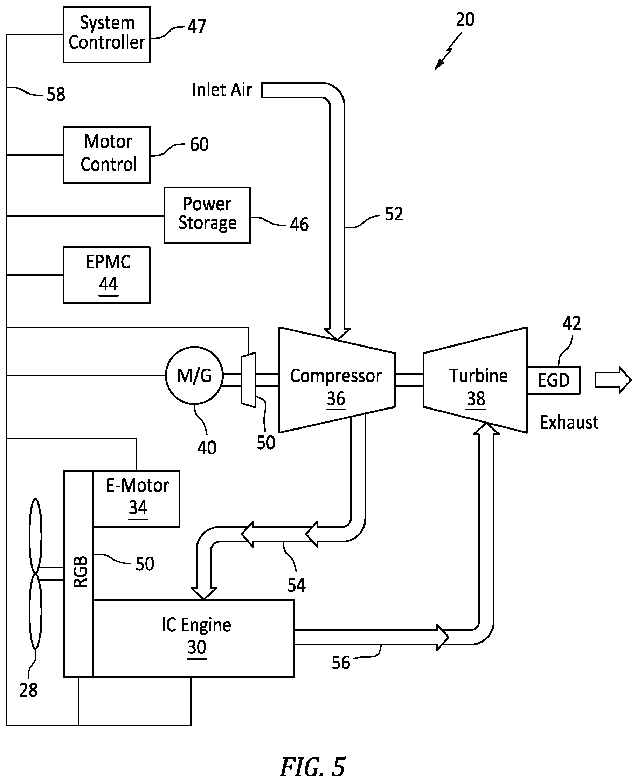

Now referring to FIG. 5, another exemplary embodiment of a present disclosure aircraft propulsion system 20 is diagrammatically shown. This embodiment is similar to the embodiment described above with respect to FIG. 3 except in this embodiment the electric generator 40 (labeled "M/G") is controllable to function as either an electric generator or as an electric motor 34. When the M/G is configured to function as an electric generator 40, the system operates as described above in the system diagrammatically shown in FIG. 3. When the M/G is configured to function as an electric motor 34 (e.g., powered from electric power stored in the electric power storage unit 46), the M/G provides motive force for driving the compressor 36. Hence, in this embodiment the turbine 38 and/or the M/G may provide motive force to drive the compressor 36. The motive power provided by the M/G can be used, for example, to augment the motive force provided to the compressor 36 by the turbine 38 during peak power portions of the aircraft flight program. In addition or alternatively, the M/G can be used to drive the compressor 36 during start-up of the IC engine 30; e.g., before exhaust gases from the IC engine 30 are appreciably available to power the turbine 38, the M/G can be used to power the compressor 36 to increase the pressure of the air fed into the IC engine 30 to assist in the start-up process of the IC engine 30. FIG. 5 does not show an IC engine cooling system 32, but the system may include an IC engine cooling system 32 like that described herein and shown diagrammatically in FIG. 2. Some embodiments of a system 20 like that shown in FIG. 5 may include an MPMD 50 disposed between the turbine 38 and the M/G 40; e.g., the MPMD 50 may function as a clutch operable to selectively disconnect the turbine 38 from the M/G 40 in the event of an M/G 40 failure, or in instances wherein M/G power production is unnecessary, or when the M/G is transitioning from functioning as an electric motor to functioning as an electric generator or vice versa.

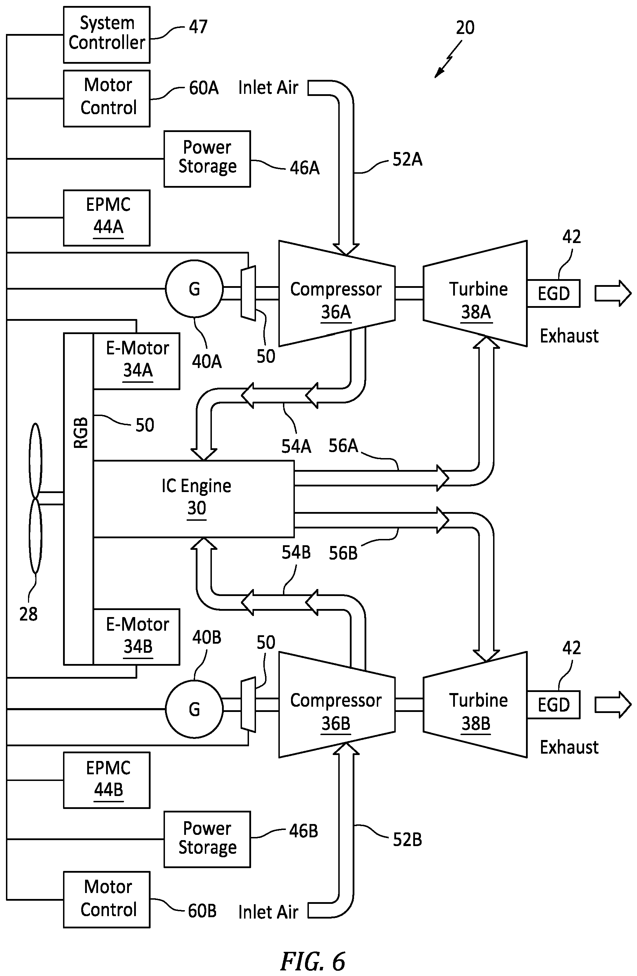

The system embodiments shown above in FIGS. 2-5 illustrate embodiments having a single compressor 36 and turbine 38 arrangement for driving the electric generator 40 and a single electric motor 34 for providing motive force directly or indirectly to the IC engine 30, or for providing additional motive force to a propulsor 28, and may include an electric generator 40 ("M/G") controllable to function as either an electric generator or as an electric motor 34. Further embodiments of the present disclosure may include an additional compressor and turbine arrangement for driving an additional electric generator 40 and an additional electric motor 34 for providing motive force directly or indirectly to the IC engine 30, or for providing additional motive force to a propulsor 28, and may include an additional electric generator 40 ("M/G") controllable to function as either an electric generator or as an electric motor. FIG. 6 illustrates a non-limiting example of such a system 20. This example is similar to the system configuration described above and shown in FIG. 3, now including a single IC engine 30, first and second compressors 36A, 36B, first and second turbines 38A, 38B, first and second electric generators 40A, 40B, and first and second electric motors 34A, 34B. FIG. 6 shows the system further includes first and second EPMCs 44A, 44B, first and second motor controls 60A, 60B, and first and second electric power storage units 46A, 46B. A single EPMC 44, or a single motor control 60, or a single electric power storage unit 46 may be used alternatively. In this embodiment, operation of the system 20 is similar to that described above and shown in FIG. 3; e.g., ambient air may enter an inlet 52A, 52B, be compressed within the first or second compressor 36A, 36B, and be passed via compressed gas ducting 54A, 54B to the IC engine 30. Exhaust gas from the IC engine 30 may be passed via exhaust gas ducting 56A to the first turbine 38A for powering the first compressor 36A and the first electric generator 40A, and may be passed via exhaust gas ducting 56B to the second turbine 38B for powering the second compressor 36B and the second electric generator 40B. Electric power produced by the first and second electric generators 40A, 40B can be provided to the first and second electric motors 34A, 34B. An advantage of this "dual" configuration is the redundancy it provides; e.g., if the first or second electric generator 40A, 40B becomes inoperative, the other of the first or second electric generator 40A, 40B can provide electric power to the system 20. Here again, an MPMD 50 may be disposed between the turbine 38 and the M/G 40 on either side of the system 20 to provide the functionality described above.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.
As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.
Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A propulsion system (20) for an aircraft (22), the system (20) comprising:
an electric generator (40) configured to produce electrical power;
a compressor (36) configured to selectively produce a flow of compressor air at an air pressure greater than an ambient air pressure;
an internal combustion engine (30) configured to selectively intake the flow of compressor air during operation and produce an exhaust gas flow during operation;
a turbine (38) in communication with and configured to power the compressor (36) and the electric generator (40), wherein the turbine (38) is powered by the exhaust gas flow;
an electric power storage unit (46) in communication with the electric generator (40); and
an electric motor (34) in communication with the internal combustion engine (30), the electric motor (34) powered by the electrical power produced by the electric generator (40), and the electric motor (34) configured to selectively provide motive force to the internal combustion engine (30);
wherein the propulsion system (20) further comprises:
a shaft (48) connecting the electric generator (40), the compressor (36), and the turbine (38), wherein the turbine (38) is configured to drive the shaft (48) and thereby drive the compressor (36); and
a mechanical power management device (50) in communication with the shaft (48) between the electric generator (40) and the compressor (36), the mechanical power management device (50) configured to receive an input power and to produce an output power, wherein the input power is different than the output power,
wherein the mechanical power management device (50) is disposed between the electric generator (40) and the compressor (36), and
wherein the mechanical power management device (50) is controllable to selectively disconnect the electric generator (40) from the turbine (38).

2. The system (20) of claim 1, wherein the input power includes a first revolutions per minute value and the output power includes a second revolutions per minute value, and the first revolutions per minute value is different from the second revolutions per minute value.

3. The system (20) of any preceding claim, further comprising:
an electric power management control (44) in communication with the electric generator (40);
a motor control (60) in communication with the electric motor (34); and
a system controller (47) in communication with the electric power management control (44), the motor control (60), and a memory device storing instructions.

4. The system (20) of any preceding claim, wherein the electric generator (40) is configurable as a motor/generator, and said motor/generator is configurable in a first mode or a second mode, wherein in the first mode the motor/generator functions as said electric generator and produces the electrical power and in the second mode functions as a second electric motor to provide motive force; and
wherein the motor control (60) is configurable to control the motor/generator to selectively operate in the first mode and the second mode, and in the second mode, the motor/generator is operable to provide motive force to the compressor (36).

## Patentansprüche

1. Antriebssystem (20) für ein Luftfahrzeug (22), wobei das System (20) umfasst:
einen elektrischen Generator (40), der dazu konfiguriert ist, elektrische Leistung zu erzeugen;
einen Verdichter (36), der dazu konfiguriert ist, selektiv einen Verdichterluftstrom mit einem Luftdruck zu erzeugen, der größer als ein Umgebungsluftdruck ist;
einen Verbrennungsmotor (30), der dazu konfiguriert ist, während des Betriebs selektiv den Verdichterluftstrom anzusaugen und während des Betriebs einen Abgasstrom zu erzeugen;
eine Turbine (38), die mit dem Verdichter (36) und dem elektrischen Generator (40) in Verbindung steht und dazu konfiguriert ist, diese anzutreiben, wobei die Turbine (38) durch den Abgasstrom angetrieben wird;
eine elektrische Leistungsspeichereinheit (46), die mit dem elektrischen Generator (40) in Verbindung steht; und
einen Elektromotor (34), der mit dem Verbrennungsmotor (30) in Verbindung steht, wobei der Elektromotor (34) durch die von dem elektrischen Generator (40) erzeugte elektrische Leistung gespeist wird und wobei der Elektromotor (34) dazu konfiguriert ist, dem Verbrennungsmotor (30) selektiv eine Antriebskraft bereitzustellen;
wobei das Antriebssystem (20) ferner umfasst:
eine Welle (48), die den elektrischen Generator (40), den Verdichter (36) und die Turbine (38) verbindet, wobei die Turbine (38) dazu konfiguriert ist, die Welle (48) anzutreiben und dadurch den Verdichter (36) anzutreiben; und
eine mechanische Leistungsmanagementvorrichtung (50), die mit der Welle (48) zwischen dem elektrischen Generator (40) und dem Verdichter (36) in Verbindung steht, wobei die mechanische Leistungsmanagementvorrichtung (50) dazu konfiguriert ist, eine Eingangsleistung aufzunehmen und eine Ausgangsleistung zu erzeugen,
wobei sich die Eingangsleistung von der Ausgangsleistung unterscheidet, wobei die mechanische Leistungsmanagementvorrichtung (50) zwischen dem elektrischen Generator (40) und dem Verdichter (36) angeordnet ist, und
wobei die mechanische Leistungsmanagementvorrichtung (50) derart steuerbar ist, dass sie den elektrischen Generator (40) selektiv von der Turbine (38) trennt.

2. System (20) nach Anspruch 1, wobei die Eingangsleistung einen ersten Wert für Umdrehungen pro Minute umfasst und die Ausgangsleistung einen zweiten Wert für Umdrehungen pro Minute umfasst und der erste Wert für Umdrehungen pro Minute von dem zweiten Wert für Umdrehungen pro Minute verschieden ist.

3. System (20) nach einem der vorhergehenden Ansprüche, ferner umfassend:
eine elektrische Leistungsmanagementsteuerung (44), die mit dem elektrischen Generator (40) in Verbindung steht;
eine Motorsteuerung (60), die mit dem Elektromotor (34) in Verbindung steht; und
eine Systemsteuerung (47), die mit der elektrischen Leistungsmanagementsteuerung (44), der Motorsteuerung (60) und einer Speichervorrichtung, die Anweisungen speichert, in Verbindung steht.

4. System (20) nach einem der vorhergehenden Ansprüche, wobei der elektrische Generator (40) als Motor/Generator konfigurierbar ist und der Motor/Generator in einem ersten Modus oder einem zweiten Modus konfigurierbar ist, wobei der Motor/Generator in dem ersten Modus als der elektrische Generator fungiert und die elektrische Leistung erzeugt und in dem zweiten Modus als ein zweiter Elektromotor fungiert, um eine Antriebskraft bereitzustellen; und
wobei die Motorsteuerung (60) dazu konfigurierbar ist, den Motor/Generator so zu steuern, dass er selektiv in dem ersten Modus und dem zweiten Modus arbeitet, und wobei der Motor/Generator in dem zweiten Modus betreibbar ist, um dem Verdichter (36) eine Antriebskraft bereitzustellen.

## Revendications

1. Système de propulsion (20) pour un aéronef (22), le système (20) comprenant :
un générateur électrique (40) configuré pour produire de la puissance électrique ;
un compresseur (36) configuré pour produire sélectivement un flux d'air de compresseur à une pression d'air supérieure à la pression d'air ambiante ;
un moteur à combustion interne (30) configuré pour aspirer sélectivement le flux d'air de compresseur pendant le fonctionnement et produire un flux de gaz d'échappement pendant le fonctionnement ;
une turbine (38) en communication avec et configurée pour alimenter le compresseur (36) et le générateur électrique (40), dans lequel la turbine (38) est alimentée par le flux de gaz d'échappement ;
une unité de stockage de puissance électrique (46) en communication avec le générateur électrique (40) ; et
un moteur électrique (34) en communication avec le moteur à combustion interne (30), le moteur électrique (34) étant alimenté par la puissance électrique produite par le générateur électrique (40) et le moteur électrique (34) étant configuré pour fournir sélectivement une force motrice au moteur à combustion interne (30) ;
dans lequel le système de propulsion (20) comprend en outre :
un arbre (48) connectant le générateur électrique (40), le compresseur (36) et la turbine (38), dans lequel la turbine (38) est configurée pour entraîner l'arbre (48) et ainsi entraîner le compresseur (36) ; et
un dispositif de gestion de puissance mécanique (50) en communication avec l'arbre (48) entre le générateur électrique (40) et le compresseur (36), le dispositif de gestion de puissance mécanique (50) étant configuré pour recevoir une puissance d'entrée et produire une puissance de sortie,
dans lequel la puissance d'entrée est différente de la puissance de sortie, dans lequel le dispositif de gestion de puissance mécanique (50) est disposé entre le générateur électrique (40) et le compresseur (36), et
dans lequel le dispositif de gestion de puissance mécanique (50) peut être commandé pour déconnecter sélectivement le générateur électrique (40) de la turbine (38).

2. Système (20) selon la revendication 1, dans lequel la puissance d'entrée comporte une première valeur de tours par minute et la puissance de sortie comporte une seconde valeur de tours par minute, et la première valeur de tours par minute est différente de la seconde valeur de tours par minute.

3. Système (20) selon une quelconque revendication précédente, comprenant en outre :
une commande de gestion de puissance électrique (44) en communication avec le générateur électrique (40) ;
une commande de moteur (60) en communication avec le moteur électrique (34) ; et
un dispositif de commande de système (47) en communication avec la commande de gestion de puissance électrique (44), le dispositif de commande de moteur (60) et un dispositif de mémoire stockant des instructions.

4. Système (20) selon une quelconque revendication précédente, dans lequel le générateur électrique (40) est configurable en moteur/générateur, et ledit moteur/générateur est configurable dans un premier mode ou un second mode, dans lequel, dans le premier mode, le moteur/générateur fonctionne comme ledit générateur électrique et produit la puissance électrique et, dans le second mode, il fonctionne comme un second moteur électrique pour fournir la force motrice ; et
dans lequel la commande de moteur (60) est configurable pour commander le moteur/générateur afin qu'il fonctionne sélectivement dans le premier mode et le second mode, et dans le second mode, le moteur/générateur est opérationnel pour fournir une force motrice au compresseur (36).
